# EUROPEAN PATENT APPLICATION

(11) **EP 3 184 436 A1**
(43) Date of publication of application: **28.06.2017**
(21) Application number: 15382660.7
(22) Date of filing: 23.12.2015
(51) Int. Cl.: B64D 41/00

(54) **DOOR SYSTEM FOR AN EXHAUST GAS DUCT OF AN AUXILIARY POWER UNIT OF AN AIRCRAFT**

(71) Applicant: Airbus Operations, S.L., 28906 Getafe Madrid (ES)
(72) Inventor: FERNÁNDEZ LÓPEZ, Pío, 28906 Getafe (ES); RAMOS-PAUL LASTRA, Pedro Felipe, 28906 Getafe (ES); SADUÑO OBREGON, Cristina, 28906 Getafe (ES); BARREIRO RODRÍGUEZ, Víctor, 28906 Getafe (ES); PULPON BEJAS, David, 28906 Getafe (ES)
(74) Representative: Elzaburu S.L.P.

(57) **Abstract**

Door system configured to be attached to the fuselage (1) of a tail cone of an aircraft wherein the tail cone comprises an exhaust gas duct (2) of an auxiliary power unit of said aircraft and an opening (10) of the exhaust gas duct (2) located at the rear part of the tail cone, the door system comprising a door which is movable between an open and a closed position, the door being configured such that, in the closed position, it covers the opening (10) of the exhaust gas duct (2) and in that the door is shaped such that it follows the aerodynamic shape of the fuselage of the tail cone in its closed position.

## Description

### FIELD OF THE INVENTION

The present invention refers to a door system suitable for an exhaust gas duct of an auxiliary power unit compartment of an aircraft.

### BACKGROUND OF THE INVENTION

Auxiliary power units ("APU") are used in aircraft to provide electrical power and compressed air to various aircraft systems and components. When an aircraft is on the ground, its main source of electrical power and cabin conditioning comes from the APU. In particular, the APU can power the environmental control systems, air drive hydraulic pumps and the starters for the engines. When an aircraft is in flight, the APU may provide pneumatic and/or electric power to the aircraft.

Typically, APUs are located in the aft section of the aircraft, at or near the tailcone section and include inlet and exhaust ducting that exit through an opening, or cut-out, at the rear part of the aircraft fuselage to allow sufficient air flow through to the APU.

The combustion system, under control of the APU controller, receives a flow of fuel from a fuel source and the compressed air from the compressor, and supplies high-energy combusted gas to the power turbine, causing it to rotate. The gas is then exhausted from the APU via the exhaust duct.

Most of current aircraft fuselage rear parts have the outlet of the APU exhaust duct left open to the atmosphere, even when the APU is not running.

This open hole affects the rear fuselage aerodynamics, creating some additional drag.

### SUMMARY OF THE INVENTION

It is the object of the invention a door system that is attached to the fuselage of the tail cone of the aircraft. As previously stated the rear part of the tail cone comprises an exhaust gas duct of an auxiliary power unit.

The door system comprises a door which is movable between an open and a closed position, the door being configured such that, in the closed position, it covers the opening of the exhaust gas and additionally in that the door is shaped such that it follows the aerodynamic shape of the tail cone in its closed position or what is the same, in a cross-section carried out by a plane perpendicular to the Z-axis of the aircraft, the door continues the line of the fuselage in said cross-section.

Therefore, the invention consists on a door system for reducing the rear fuselage aerodynamic drag added by the open outlet of the APU exhaust that it is reduced by properly closing this open exhaust duct by incorporating a door movable between an open and a closed position depending if the APU is running or not.

It is also an additional object of the invention a tail cone of an aircraft that comprises an exhaust gas duct of an auxiliary power unit as previously stated and a door system according to the preceding technical features.

### DESCRIPTION OF THE FIGURES

To complete the description and in order to provide for a better understanding of the invention, a set of drawings is provided. Said drawings form an integral part of the description and illustrate preferred embodiments of the invention. The drawings comprise the following figures.
Figure 1 shows a perspective view of the rear part of an aircraft having a door system according to one embodiment of the invention.
Figure 2 shows a schematic plan view of an embodiment of the door system in a closed and in an open position.
Figure 3 shows a schematic plan view of an embodiment of a door in a closed position.
Figure 4 shows a schematic plan view of an embodiment of a door in an open position.
Figure 5 shows a schematic plan view of an embodiment of both arms of the door of figures 3 and 4.
Figure 6 shows a schematic front view of an embodiment of an actuation system in a closed and in an open position.
Figure 7 shows a rear schematic view of the tail cone of an aircraft having an embodiment of the door system in an open position of the doors.
Figure 8A shows a side schematic view of the embodiment shown in figure 7.
Figure 8B shows a top schematic view of the embodiment shown in figure 7.
Figure 9 and Figure 10 show a rear schematic view of the tail cone of an aircraft having an embodiment of the door system in an open and closed position of the doors.

### DETAILED DESCRIPTION OF THE INVENTION

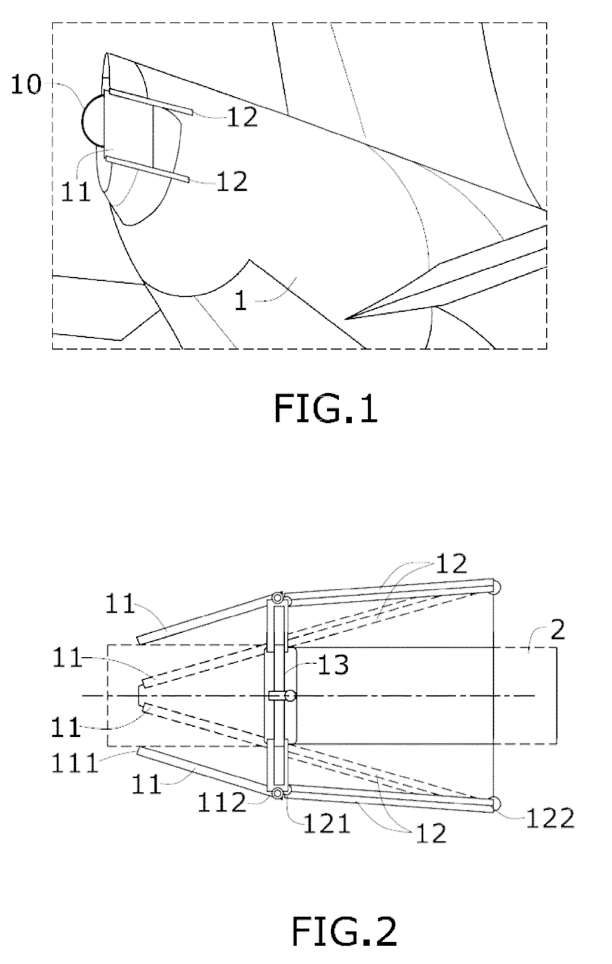

Figure 1 discloses an embodiment of a door (11) attached to the fuselage (1) of the tail cone of an aircraft. It is also disclosed the opening (10) of the exhaust gas duct (2) of the auxiliary power unit of said aircraft.

As can be seen, the door (11) is shaped such that it follows the shape of the tail cone (1) in the closed position. Additionally, the door (11) is joined to the fuselage through two arms (12).

Figure 2 shows a plan view of a schematic representation in a closed and in an open position (in dash lines) of an embodiment of the door system comprising two doors (11). The embodiment comprises two doors (11) that are configured to be located symmetrically with respect to the longitudinal axis of the aircraft, each door (11) comprises a rear end (111) and a forward end (112). In the closed position, both doors (11) follow the aerodynamic shape of the fuselage (1) of the aircraft such that they continue the line of the fuselage (1) of the aircraft.

Figure 2 also discloses the actuation system (13) configured such that it actuates on the forward end (112) of the doors (11) such that it moves said forward end (112) in a direction perpendicular to the longitudinal axis of the aircraft, for moving the door (11) between the closed and the open position. The whole door (11) is displaced in a parallel movement. More specifically, the doors (11) are moved along the X-direction of the aircraft. In the open position, the doors (11) are moved until the rear end (111) surpasses the projection of the opening (10) of the exhaust duct (2).

The disclosed system also comprises two arms (12) having a rear end (121) and a forward end (122), the rear end (121) of the arm (12) being pivotably joined to the forward (112) end of the door (11) and the forward end (122) being pivotably fixed to the fuselage (1) of the aircraft.

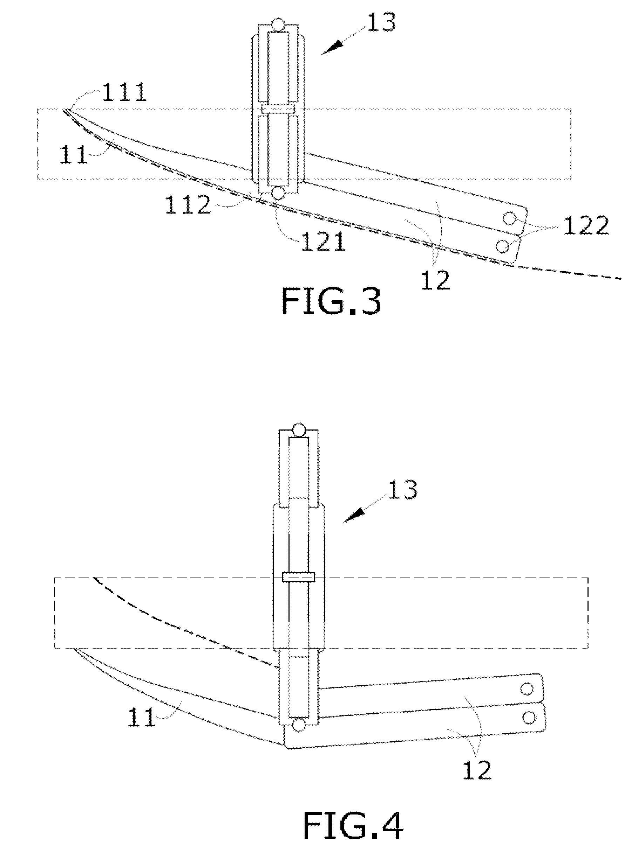

Figure 3 also discloses the same embodiment of Figure 2 showing one door (11), an arm (12) and the actuation system (13) in a closed position.

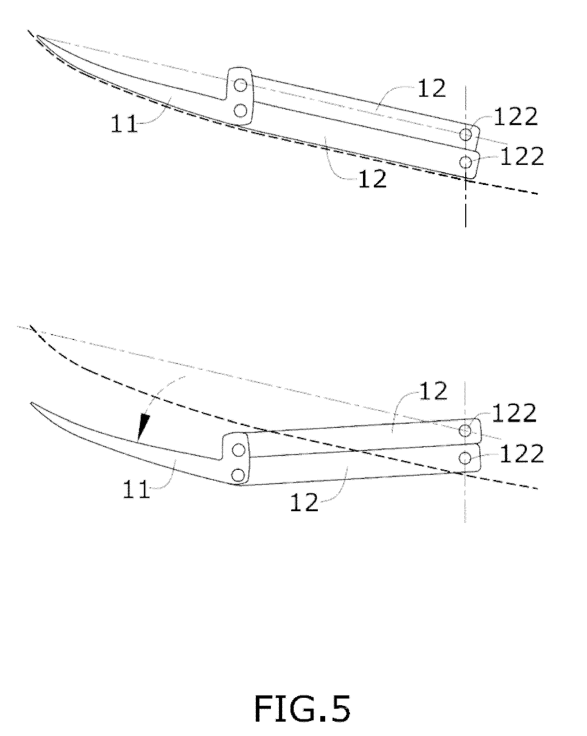

Figure 4 discloses the embodiment of Figure 3 in an open position and Figure 5 discloses that each door (11) is connected to two arms (12) that moves as a parallelogram together with the door (11). It is preferred to have both arms (12) to provide robustness and stability to the door (11) when moving in and out while exposed to the aerodynamic forces.

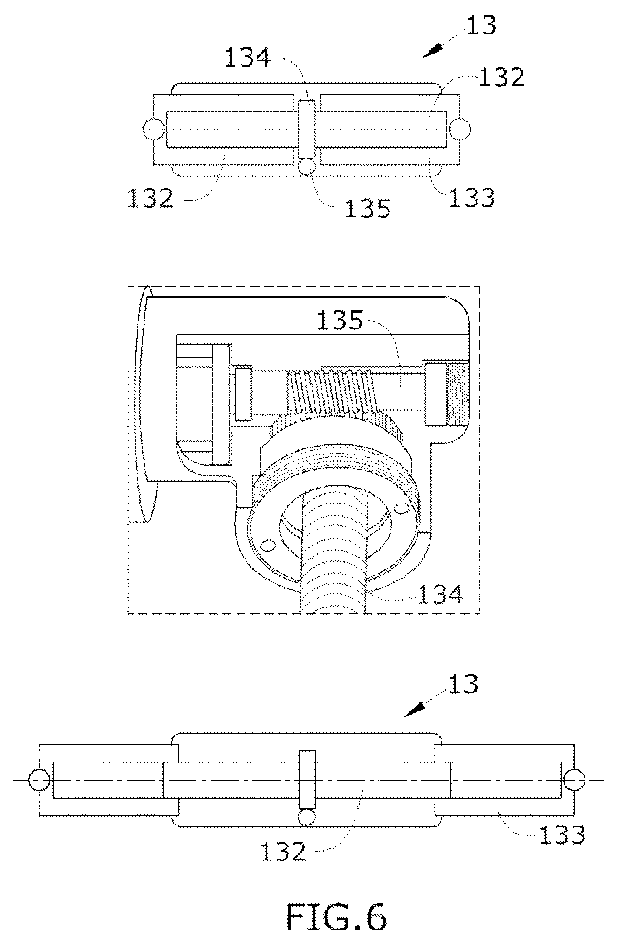

Regarding the actuation system (13), the embodiment shown in the figures, for instance in Figure 6, comprises a screwed male (132) and female (133) part configured such that the female part (133) is movable with respect to the male (132) part for opening and closing the doors (11). Particularly, the actuation system (13) comprises guided female turnbuckles and male turnbuckles that are actuated by a teethed gear (134) in connection with a rotating shaft (135) with screw.

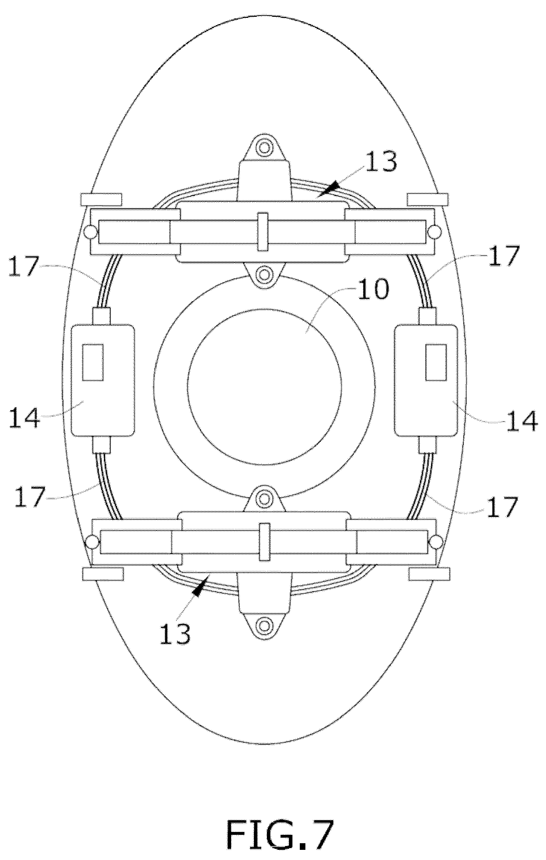

Figure 7 discloses a particular embodiment of the invention showing a rear view of the rear part of the tail cone and the exhaust opening (10). The actuation system (13) comprises an upper and a lower actuation system (13), the upper actuation system (13) being connected with the upper arms of the doors (11) and the lower actuation system (13) being connected with the lower arms of the door (11).

It also discloses two rotating motors (14), being each rotating motor (14) linked to each door (11). Each rotating motor (14) is connected to a flexible cable (17) and therefore each rotating motor (14) transmits its shaft's rotation to the flexible cables (17) connected at both ends.

The embodiment also comprises two actuators (16) which changes the rotation movement of the flexible cable (17) into a different direction of rotation due to a bevel gear (161) at 90º located inside the actuator (16) box. The bevel gear (161) is linked to the rotating shaft (135).

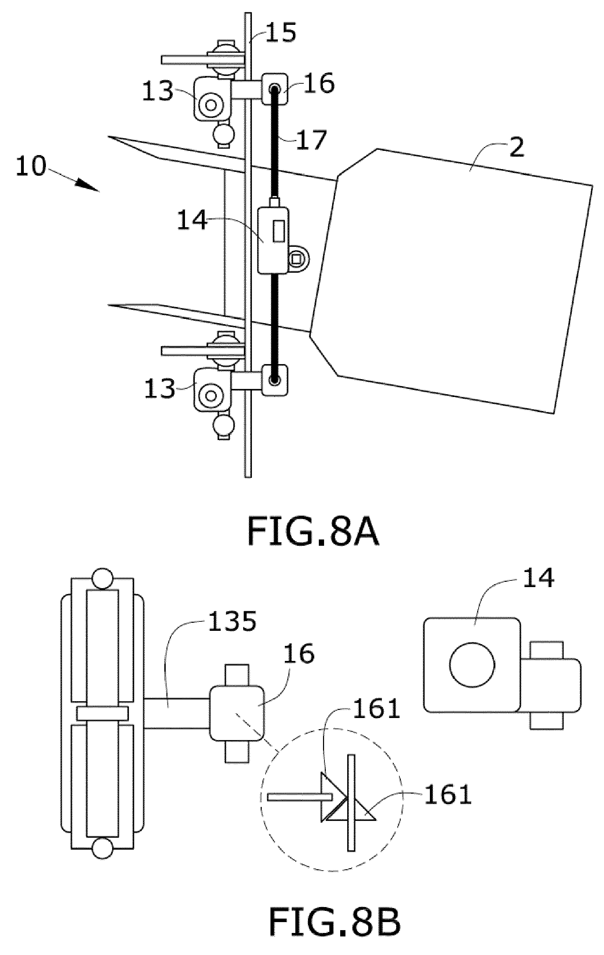

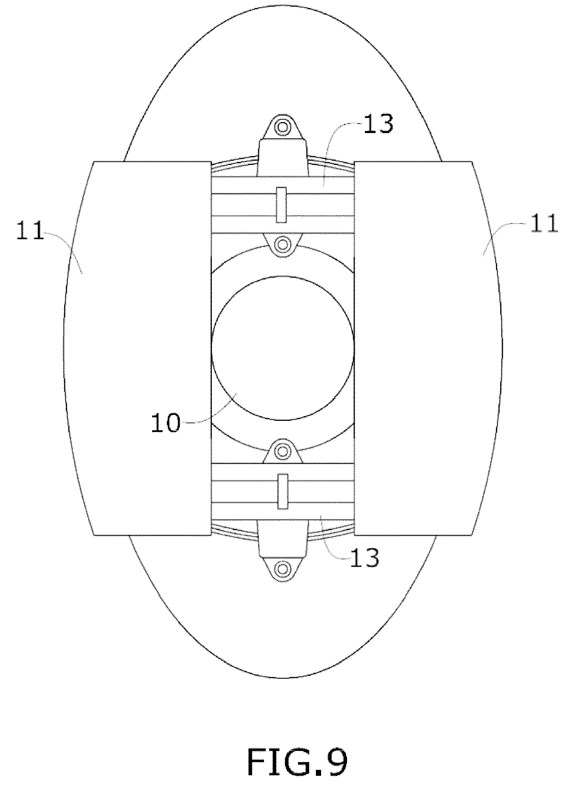

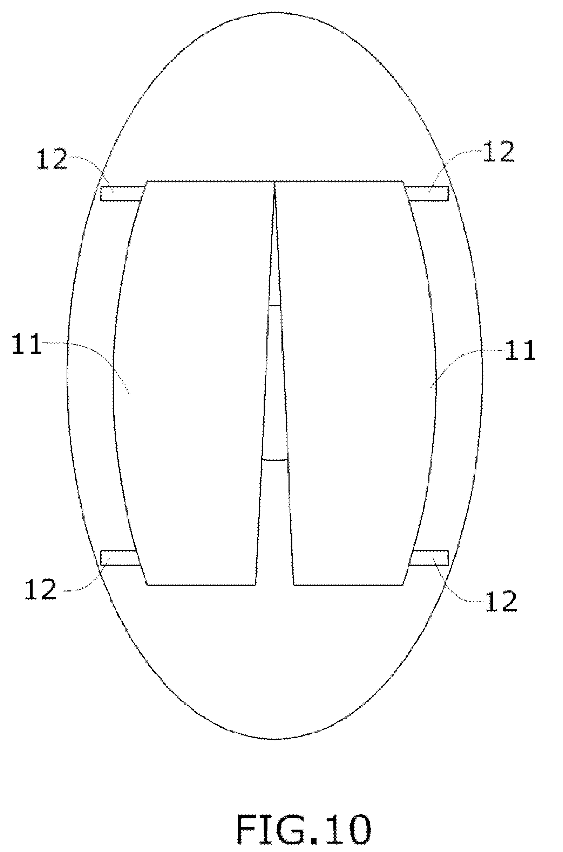

Figure 8 discloses that the actuation system (13) is attached to a frame (15) of the fuselage of the aircraft and Figures 9 and 10 an embodiment of the door system in an open and closed position.

## Claims

1. Door system configured to be attached to the fuselage (1) of a tail cone of an aircraft wherein the tail cone comprises an exhaust gas duct (2) of an auxiliary power unit of said aircraft and an opening (10) of the exhaust gas duct (2) located at the rear part of the tail cone, the door system being **characterised in that** it comprises a door which is movable between an open and a closed position, the door being configured such that, in the closed position, it covers the opening (10) of the exhaust gas duct (2) and **in that** the door is shaped such that it follows the aerodynamic shape of the fuselage of the tail cone in its closed position.

2. Door system, according to claim 1, wherein it comprises two doors (11) that are configured to be located symmetrically with respect to a vertical plane containing the longitudinal axis of the aircraft.

3. Door system, according to claim 2, wherein it comprises:
- two doors (11) having a rear end (111) and a forward end (112),
- an actuation system (13) that is configured such that it actuates on the forward end (112) of each door (11) such that it moves said forward end (112) in the Y- direction for moving the door (11) between the closed and the open position.

4. Door system, according to claim 3, wherein it comprises at least two arms (12) having a rear end (121) and a forward end (122), the rear end (121) of the of the arm (12) pivotably joined to the forward (112) end of the door (11) and the forward end (122) of the arm (12) being pivotably configured to be fixed to the fuselage of the aircraft.

5. Door system, according to any claim 3 or 4, wherein the actuation system (13) comprises a screwed male (132) and female (133) parts configured such that the female part (133) is movable with respect to the male (132) part in the Y- direction of the aircraft for opening and closing the doors (11).

6. Door system, according to claim 5, wherein the actuation system (13) comprises a teethed gear (134) in connection with a rotating shaft (135) with screw.

7. Door system, according to any claim 4 to 6, wherein each door (11) is linked to two arms (12).

8. Tail cone of an aircraft, comprising an exhaust gas duct (2) of an auxiliary power unit, **characterised in that** it comprises the door system according to any preceding claim.

9. Tail cone of an aircraft, according to claim 8, wherein the actuation system (13) is attached to a frame (15) of the fuselage (1) of the aircraft.

10. Tail cone of an aircraft, according to claims 8 or 9, wherein the door system comprises:
- a lower and an upper actuation system (13) each of the actuation systems in connection with both doors (11),
- two rotating motors (14), each rotating motor (14) driving one of the doors (11) and each rotating motor (14) in connection with the lower and the upper actuation systems (13).

11. Tail cone of an aircraft, according to claim 10, wherein the door system comprises a flexible cable (17) connected to each rotating motor (14) such that it
transmits its shaft's rotation to the flexible cables (17), the flexible cables (17) connected to the actuation systems (13).

12. Tail cone of an aircraft, according to claim 11, wherein the door system comprises two actuators (16) comprising a bevel gear (161) for changing the rotation movement of the flexible cable (17) into a different direction of rotation, the actuator (16) linked to the rotating shaft (135).
